# EUROPEAN PATENT APPLICATION

(11) **EP 2 339 543 A2**
(43) Date of publication of application: **29.06.2011**
(21) Application number: 10380159.3
(22) Date of filing: 20.12.2010
(51) Int. Cl.: G07B 15/06, G06Q 30/00

(54) **Method to validate transactions by means of payment card in a toll route**

(30) Priority: 22.12.2009 ES 200931227
(71) Applicant: Autopistas Concesionaria Española S.A., 08040 Barcelona (ES)
(72) Inventor: Medina Cabezas, Miguel Angel, 08040 Barcelona (ES)
(74) Representative: Torner Lasalle, Elisabet

(57) **Abstract**

Comprises:
- requiring, from a local system, the initiation of at least one online operation with a remote system, to complement offline validation operations; and
- comparing the results of said initiated online operation with reference values corresponding to imposed conditions for said results, and canceling said online operation if said results do not coincide with said reference values.

## Description

### Field of the Art

The present invention relates to a method for validating transactions by means of a payment card in a toll road, of the type comprising performing offline validation operations for said card by means of a local system, and complementarily online validation operations by means of the communication of said local system with a remote system, which integrates or is connected to an authorizing center.

The invention proposes in said environment wherein local validation and online validation are combined a method which comprises temporarily canceling online operations if such operations are considered to be deficient (in relation to configurable, determined selection thresholds or operating parameters), to thus reduce the unfavorable impact of irregularities in the online authorization systems on the fluidity of the traffic through the toll roads.

### Prior State of the Art

Most known toll systems use, for the validation of transactions by means of a card, offline validation methods for authorizing the transactions performed by a user in a toll road by different payment means, such as credit cards or even smart cards, or chip cards, or EMV (Europay MasterCard VISA) cards, having for that purpose control units having means for reading and interpreting the data of the cards (expiration, issuing entity, codes) and databases with lists of invalid cards for various reasons.

In relation to the performance of transactions using as a payment means a smart card, or chip card, or EMV (Europay MasterCard VISA) card, there are a number of background documents which already contemplate it, as is the case of patent US6145035, which proposes a system for performing transactions using a smart card as the means. Its description indicates that the card can be an EMV card and that one of the applications is that of toll payment.

Application WO2004095352A1 discloses a proposal which, although it does not relate to tolls, describes the adaptation of a system incorporating a magnetic stripe reader, a smart card reader and a computer with an operating system adapted to process the information read from the magnetic stripes, but not from the smart card. To that end, the system comprises a device application module and a smart card module, the former being adapted to send a payment communication to the latter through a program application interface when a transaction with the smart card is performed. The smart card module facilitates the processing of said transaction_ and operates independently from any other device of the system. It is claimed that the card is an EMV card.

Toll systems are also known which complement the mentioned offline validation with an online validation by means of the communication of a local system with a remote system, or authorizing center, thus giving greater security and robustness to the mentioned transaction validation.

One of such systems is described in the document "Validación Online y tarjetas EMV" (Online validation and EMV cards), of Indra, ITS Barcelona March 2009, which proposes an online validation system for, for example, EMV cards in toll roads communicated with an online server for offline or online validations, indicating that the conventional offline validation system would have to be adapted by installing certified terminals and applications, for its integration in an online system.

The present inventors do not know any proposal relating to solving the problems that a deficient online validation (for example due the saturation of the issuing center, deficiencies or delays in sending the response, etc.) can cause in the mentioned validation systems, such as the blocking or the imposition of inadmissible delays to the validation operations, affecting not only the user who is performing the transaction but also the rest who are waiting behind him.

### Description of the Invention

The present invention relates to a method for validating transactions in a toll road, of the type which comprises performing offline validation operations from a local system and online validation operations by means of the communication of said local system with a remote system, wherein the method comprises requiring the initiation of at least one online operation from said local system to complement the offline validation operations.

The invention offers protections to the mentioned method to assure viability thereof without negative repercussions on the fluidity of the traffic, for cases in which there are irregularities or delays in the online validation.

To implement the invention, in a possible embodiment it has been envisaged that each of the lanes of the various toll stations, provided with an automatic machine for controlling the passage and the payment means, is connected to a support server communicating with a remote server of the authorizing center.

Unlike conventional proposals, the method proposed by the present invention comprises a supervision of the results of said initiated online operation to, in certain cases, disable it, limiting the validation to a local validation, until the online validation conditions return to a previously established, determined quality regime.

Comparing the results of the online validation operation with reference values corresponding to imposed conditions for said results (which are configurable) and canceling said online operation if said results do not coincide with said reference values, have particularly been envisaged.

It is thus determined that the online operation is deficient, either due to problems existing in the communication between the remote system and the local system or due to an incorrect processing in the remote system of the data sent from the local system, or for any other reason of structural or software type, proceeding to temporarily stop using the online validation after said determination because it is not reliable.

Said reference values relate to one or more of the following conditions, depending on the embodiment:
- maximum number of failed transactions or transactions without response by said remote server or authorizing center;
- maximum percentage of refusal of operations by said remote server, although the request thereof is in different localizations; and
- time without response, after the validation request, exceeding a maximum.

For one embodiment, said reference values of said conditions are manually or automatically adjustable depending on various parameters, such as traffic density in the toll area, etc.

In relation to the case in which said condition is said maximum time without response, the method comprises the local system notifying said remote system of the online operation having been canceled due to said maximum time without response having been exceeded, so that said authorizing center is aware of such situation, i.e., that validations are being performed without its intervention, and so that it is possible to solve the problem.

The method comprises, after canceling said online operation, declaring as valid the transaction which was being performed when said cancellation occurred, only by means of the previously performed offline operations.

For one embodiment, the method comprises, after said cancellation of said online operation, canceling the online operations for validating the following transactions, the latter being carried out only by means of offline operations, and again requiring online validation operations automatically after a predetermined number of consecutive transaction validations performed only offline or after a predetermined time.

Said remote server is generally an authorizing center, and said online operations relate to non-accountable authorizations performed from said authorizing center, said requirement of the initiation of said online operation being an authorization request addressed to said authorizing center.

Although the proposed method is applied to the transactions validation performed by a user in a toll road using any suitable means for such purpose, for one embodiment said validation operations relate to the validation of a payment card introduced by a user to perform said transaction, such as a magnetic card or a chip card, or an EMV card.

In relation to the validation operations to be performed both offline and online, they can be any of those known, for example from the document "Validación Online y tarjetas EMV", of Indra, ITS Barcelona March 2009, mentioned in the state of the art section, i.e., consulting blacklists, whitelists, performing expiration controls, Luhn code controls, etc.

A person skilled in the art will be able to introduce changes and modifications in the described embodiments without departing from the scope of the invention as it is defined in the attached claims.

## Claims

1. A method for validating transactions in a toll road, of the type which comprises performing offline validation operations from a local system and online validation operations by means of the communication of said local system with a remote system, wherein the method comprises requiring the initiation of at least one online operation from said local system to complement the offline validation operations, the method being **characterized in that** it comprises comparing the results of said initiated online operation with reference values corresponding to imposed conditions for said results, and canceling said online operation if said results do not coincide with said reference values.

2. The method according to claim 1, **characterized in that** said reference values relate to at least one of the following conditions:
- maximum number of failed transactions or transactions without response by said remote server;
- maximum percentage of refusal of operations by said remote server; and
- maximum time without response.

3. The method according to claim 2, **characterized in that** the reference values of said conditions are adjustable.

4. The method according to any one of the previous claims, **characterized in that**, for the case in which said condition is said maximum time without response, the method comprises the local system notifying said remote system of the online operation having been canceled due to said maximum time without response having been exceeded.

5. The method according to claim 3 or 4, **characterized in that** it comprises, after canceling said online operation, declaring as valid the transaction which was being performed when said cancellation occurred, only by means of the offline operations performed.

6. The method according to claim 5, **characterized in that**, after said cancellation of said online operation, it comprises canceling the online operations for validating the following transactions, the latter being carried out only by means of offline operations.

7. The method according to claim 6, **characterized in that** it comprises again requiring online validation operations automatically after a predetermined number of consecutive transaction validations performed only offline or after a predetermined time.

8. The method according to any one of the previous claims, **characterized in that** said remote server is an authorizing center, and **in that** said online operations relate to non-accountable authorizations performed from said authorizing center.

9. The method according to claim 8, **characterized in that** said requirement of the initiation of said online operation is an authorization request addressed to said authorizing center.

10. The method according to any of the previous claims, **characterized in that** said validation operations relate to the validation of a payment card introduced by a user to perform said transaction.

11. The method according to claim 10, **characterized in that** said payment card is a chip card, or EMV card.
